# EUROPEAN PATENT SPECIFICATION

(11) **EP 1 559 239 B1**
(45) Date of publication and mention of the grant of the patent: **17.06.2009**
(21) Application number: 03810390.9
(22) Date of filing: 14.08.2003
(51) Int. Cl.: H04L 9/32

(54) **METHOD AND DEVICES FOR PERFORMING SECURITY CONTROL IN ELECTRONIC MESSAGE EXCHANGES**
VERFAHREN UND EINRICHTUNGEN ZUR DURCHFÜHRUNG EINER SICHERHEITSKONTROLLE IN ELEKTRONISCHEN NACHRICHTENVERMITTLUNGEN
PROCEDE ET DISPOSITIF PERMETTANT D'EFFECTUER UN CONTROLE DE SECURITE DANS DES ECHANGES DE MESSAGES ELECTRONIQUES

(30) Priority: 05.11.2002 IT MI20022339
(43) Date of publication of application: 03.08.2005
(73) Proprietor: Stigliani, Domenico, 47037 Rimini (IT); Stigliani, Faustino Nicola, 42019 Scandiano (RE) (IT); Rucco, Paolo, 42019 Scandiano (RE) (IT)
(72) Inventor: Stigliani, Domenico, 47037 Rimini (IT); Stigliani, Faustino Nicola, 42019 Scandiano (RE) (IT); Rucco, Paolo, 42019 Scandiano (RE) (IT)
(74) Representative: Faraggiana, Vittorio
(86) International application number: PCT/EP2003/009063
(87) International publication number: WO 2004/042997

(56) References cited:
- WO-A-00/35143
- US-A- 5 475 763
- US-A- 6 026 165
- CHRISTOFFERSSON P: "MESSAGE AUTHENTICATION AND ENCRYPTION COMBINED" COMPUTERS & SECURITY, ELSEVIER SCIENCE PUBLISHERS. AMSTERDAM, NL, vol. 7, no. 1, 1 February 1988 (1988-02-01), pages 65-71, XP000117563 ISSN: 0167-4048
- W.C.MARTIN: "Message Replay Prevention Using a Previously Transmitted Random Number to Sequence the Messages" IBM TECHNICAL DISCLOSURE BULLETIN, vol. 27, no. 3, August 1984 (1984-08), pages 1758-1759, XP002264866 US

## Description

The present invention relates to a method and devices for performing security control in electronic message exchanges and in particular for monetary transactions such as those made with credit or debit cards and the like.

Security problems in the exchange of messages in electronic form and especially over intrinsically unsafe networks like for example the networks making up Internet are known.

Among the various problems there can be listed the possibility that someone might generate messages (in particular, monetary transaction requests) by falsifying the owner of the message and the possibility that actual messages might be duplicated to obtain that a request contained in the message be met again.

In the prior art it has been sought to remedy some aspects of these problems, for example by introducing systems like the so-called electronic signature' which however allows having reasonable certainty of the identity of the owner of the message but not of the uniqueness of the message.

US 6.026.165 discloses a message transmission system using encrypted sequence numbers to guarantee reception of the messages in a correct order.

Known systems are however in general complicated and difficult to apply and/or they generate an overload in the processing and/or transmission of messages which are not always acceptable and especially in the case of applications which they produce and must manage a high number of message in relatively short times such as for example with monetary transactions by credit or debit card and especially if used to pay for goods or services on internet or in stores having POS terminals or the like.

An example of system for performing security controls in electronic message exchanges is disclosed by WO 00/35 143, wherein different identifiers and secret values are employed for generating a secure message.

The general purpose of the present invention is to remedy the above mentioned shortcomings by making available a method and devices for security verification in the exchange of messages electronically which would be fast, easy to apply and intrinsically reliable.

In view of this purpose it was sought to provide in accordance with the present invention a method for verifying the security of a message transmitted and received in electronic form which on the transmitting side comprises the steps of associating with the message for its later security verification a univocal message identifier and an identifier for control of the identity of the owner of the message with the control identifier being obtained by applying to the univocal message identifier an encoding associated with the owner of the message to be transmitted, and on the receiving side for security verification of a received message comprises the steps of verification and signaling of the fact of having or not having already received a message with the same univocal identifier of the associated message, applying a decoding associated with a supposed owner of the received message to the checking identifier of the owner associated with the received message, and ascertaining and signaling the agreement or not between the univocal message identifier associated with the received message and proven to be said decoding of the control username.

Again in accordance with the present invention it was sought to realize a system for safety verification of a message transmitted and received in electronic form comprising on the transmitting side a univocal username generator of a message, and an encoding device receiving the message username produced by the generator and encoding it in accordance with a code associated with the owner of the message to be transmitted to obtain therefrom an identifier for checking the identity of the message owner, and transmission means associating with the message to be transmitted the checking identifier and the univocal message identifier obtained, and on the receiving side comprises for safety verification of a received message a checking device which verifies and signals that the message identifier associated with the received message has of has not been received previously, and a decoding device which receives the owner checking identifier associated with the received message and applies thereto a decoding associated with a supposed owner of the received message; and verification means which ascertain and signal the agreement or not of the univocal message identifier with the result of the decoding of the checking username.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a block diagram of a device or part on the transmitting side of a security verification system realized in accordance with the present invention,
FIG 2 shows a block diagram of a device or part on the receiving side of a security verification system realized in accordance with the present invention, and
FIG 3 shows diagrammatically a possible combination of information in accordance with the method of the present invention.

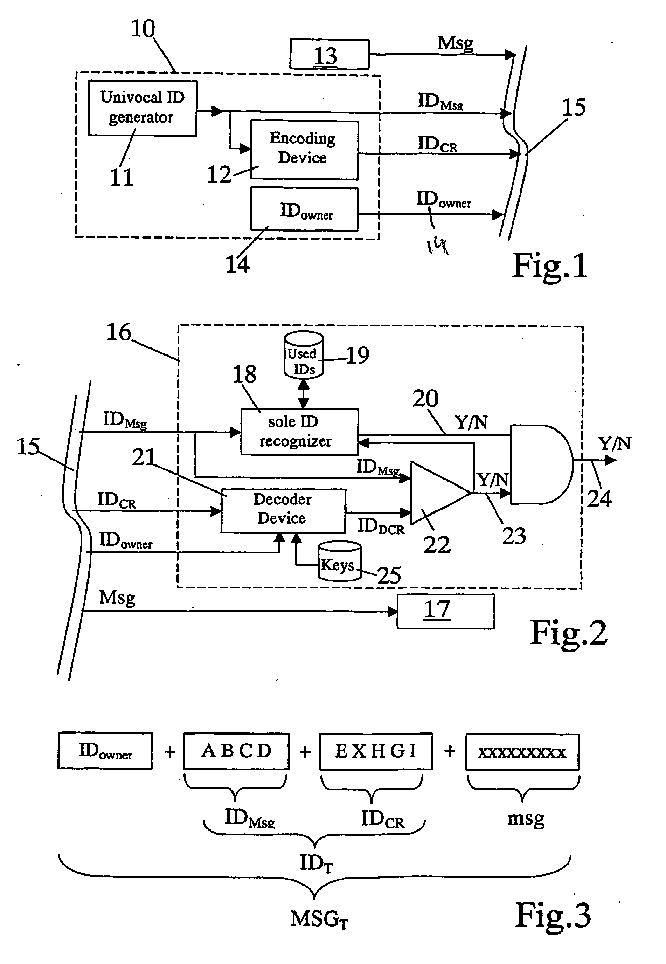

With reference to the figures, FIG 1 shows the part on the transmitting side designated as a whole by reference number 10 of a security system realized in accordance with the present invention. This part or device 10 comprises a generator 11 for generation of a univocal message username (designated by ID_{Msg}) and an encoding device 12 which receives the message username ID_{Msg} produced by the generator and encodes it to obtain an encoded version thereof called here identifier ID_{CR} which will be usable as clarified below as the identifier for checking the identity of the message owner.

The device 10 is associated with a known system 13 (not described here as it is well known and readily imaginable to those skilled in the art) for production of messages Msg to be transmitted and of which it is wished to ensure the security offered by the present invention. These messages can be conventional electronic messages for management of monetary transactions of, for example, a credit or debit card circuit.

The generator 11 is a known generator of single keys. It can be realized either as hardware or software, for example the known GUID generator of Microsoft. Its main operational principle is based on the random generation of a key or ID sufficiently long to make the probability of generating two identical keys practically zero. For each message to be sent, the generator therefore produces an identifier which can be represented by a sequence of bits, number, characters et cetera and which is the only one and will never be used again. This ensures that no "twin" keys exist.

The ID of the message (which can also be called LEFT KEY) is surely to be understood therefore as a key but produced before and thus a new key.

The encoding device 12 encodes the ID_{Msg} so as to obtain a username ID_{CR} containing the ID_{Msg} in a concealed manner making it possible if the correct decoding is known to go back to it or at least to a representation thereof allowing knowing whether ID_{CR} was really created by correct encoding of ID_{Msg}. The ID_{CR} can also be called RIGHT KEY.

With a message Msg are thus associated the two usernames (unique for each message) ID_{Msg} and ID_{CR}. As clarified below, the former allows knowledge of the uniqueness of a message while the second allows having confirmation of the identity of the owner who produced the message or to whom it refers. Indeed, encoding of ID_{Msg} in ID_{CR} is done in accordance with a code which was previously associated with the owner of the message to be transmitted. For example it is advantageous that the encoding and the following corresponding decoding be realized as encryption and decryption operations with a key and with a particular key or algorithm associated with the particular owner of the message. In particular, such encryption and decryption can be advantageously of the known public/private key type in which the encryption is done by the encoding device 12 using the private secret key of the owner who sends the message or to whom it refers.

Once the usernames to be associated with the message are obtained they can be sent to the receiving part of the system through a suitable known transmission means, for example internet, dedicated networks, telephone lines et cetera. The transmission means and the paths followed by the various usernames and the message can be the same for all or different from each other depending on specific requirements or desires.

ID_{Msg} and ID_{CR} can also be assembled in a single compound identifier ID_{T} which can also be called SUPER KEY = LEFT KEY + RIGHT KEY.

If a single transmission means is used, the usernames and the message can be assembled in a single total MSG_{T} message. All this is shown clearly in FIG 3. If desired, this total message can be in turn encrypted in accordance with known techniques.

In one embodiment of the present invention the message is also associated with a username ID_{owner}, unique for each possible owner of the message to be transmitted. For example, in case of a transaction by credit card said ID_{owner} can be the card number. This ID_{owner} can be produced or extracted by means 14, for example a programmed electronic memory, manual input means or reading means of owner data contained on a card used in the transaction. This ID_{owner} can also be used to control correct encoding in the encoding device 12.

Known methods of combination of the various parts and possible known transmission codifications even dependent on the particular means of transmission and even desired for implementation of additional security levels can be used. All this is readily imaginable to those skilled in the art and is not further discussed or shown.

FIG 2 shows the part designated as a whole by reference number 16 of the system in accordance with the present invention present on the message receiving side.

To verify the security of a received message (Msg) (which can be processed in accordance with the intended use of the message by any known processing system 17, for example a transaction manager not further discussed here, said receiving part 16 comprises a control device 18 to recognize whether an ID_{Msg} associated with a received message has not been received previously. For recognition, the device 18 manages an archive of previously used IDs 19. Every time an ID_{Msg} arrives the device checks in the archive 19 whether it has already been memorized and issues a corresponding ID acceptable or unacceptable signal 20. If the ID has not been used yet the associated message is considered new and the ID is memorized in the archive to prevent future new use.

The receiving part 16 also comprises a decoding device 21 which receives the control identifier of the owner ID_{CR} associated with the received message and applies to it a decoding associated with a supposed owner of the received message. At outlet from the decoder an identifier ID_{DCR} is thus obtained. The decoding is realized in such a manner that there is a predetermined agreement between ID_{Msg} and ID_{DCR} if the ID_{CR} had been obtained for encoding of the ID_{Msg} by the method associated with the message owner.

Verification means 22 receive the ID_{Msg} and ID_{DCR} and ascertain and signal with a signal 23 the existence or not of said predetermined agreement. If there is agreement the message can be considered as belonging to its legitimate owner. If both the conditions at the outlets 20 and 23 are verified positively the device 16 emits a positive verification signal 24 and the message Msg associated with the usernames received can be considered acceptable on the basis of the security verification in accordance with the present invention.

As may be seen again in FIG 2, the agreement signal 23 can also be sent to the sole ID recognizer 18 so as to inhibit memorization of the message ID among the IDs already used in case agreement between ID_{Msg} and ID_{CR} is not found. This avoids useless memorization of 'false' IDs among the IDs already used. The decoding device 21 will usually operate in reverse of the encoding device 12 in such a manner that if the encoder 12 obtains a certain ID_{CR} from a specific ID_{Msg} the decoder will again obtain the same ID_{Msg} starting form the ID_{CR}. In this case the agreement verification made by the device 22 will be a verification of sameness among received IO_{Msg} and decoded ID_{CR}.

If, as mentioned above, the encoder makes a key encryption the decoder will make a corresponding key decryption. The keys associated with the owners will be memorized in a purposeful key archive 25.

For example if the encryption system chosen is with public/private key, the decoder will perform a decryption as called for by said known system by using the appropriate key corresponding to the owner associated with the message. In accordance with one aspect of the present invention, if on the transmitting side the above mentioned owner identifier (ID_{owner}) is also associated with the message, on the receiving side the decoding to be applied can advantageously be selected from among a plurality of possible decodings on the basis of the owner identifier associated with the received message. Selection of the right key from the archive 25 thus becomes much faster since the ID_{owner} is supplied to the decryption device 21 as a search index for the right key in the key archive 25.

It is now clear that it is possible to realize a device 10 for association of safety verification factors with a message transmitted in electronic form and a system 10, 16 for a security verification of a message transmitted and received in electronic form and a method for a security verification of a message transmitted and received in electronic form.

As readily imaginable to those skilled in the art, the practical realization can be totally software, totally hardware or mixed.

The device 10 can also be realized in portable form (for example a smart card) to be supplied for example to a credit card owner who can thus generate an ID_{T} or SUPER KEY to be supplied together with the other data (amount to be debited thereto, card number et cetera) for payment by card. These data can be considered the message MSG and if necessary encrypted in accordance with a known system.

As an alternative the device could be kept at the store where the purchase is made and the card owner could input therein in a reserved manner the encoding key for production of the RIGHT KEY part of the SUPER KEY which would thus be generated by the apparatus.

The security of the system in accordance with the present invention is evident from the above description.

The SUPER KEYs are to be considered public as they are transmitted over channels which are intrinsically unsafe but which conceal within them in protected mode the univocity of both the message and the owner.

An organization supplying the above mentioned service could supply to the customer an adequate hardware and/or software support (even directly integrated in an 'intelligent' credit card) and by means of this support the customer would be able to send the SUPER KEY generated through either a private or a public position. The SUPER KEY can cover (in the example of the monetary transaction) the same steps covered by the information of the normal credit or debit card. The SUPER KEY once used is recorded in the database of the organization and thus becomes inactive. Whoever tried to reuse it would nullify the request and interception of the SUPER KEY is thus useless. The SUPER KEY can also be understood as 'single use' identification.

A dishonest user could refuse to use his own unique key generator but steal one of the keys already produced by another user and create a twin thereof. The key would however be unusable because each time a user makes a transaction by using the generator of unique keys, the key generated is added to the list present in the organization's database. The database contains the list of all the LEFT KEYs produced over time and only LEFT KEYs, not RIGHT or SUPER KEYs, and ensures that the keys already produced are unusable. The predetermined biunivocal agreement between the user and the corresponding algorithm or encoding/decoding key with the corresponding archive of keys and/or algorithms with the organization ensures the possibility for the organization to really distinguish two users and reject counterfeit requests or messages. Since the message uniqueness identifier reaches the organization both in clear and encoded form it is impossible to falsify only the message uniqueness identifier within a SUPER KEY.

Naturally the above description of an embodiment applying the innovative principles of the present invention is given by way of non-limiting example of said principles within the scope of the exclusive right claimed here.

For example the message MSG can be of any known type, even encrypted, to be decrypted upon arrival in accordance with any known method. These operations can also be performed by the same devices 12, 21 which encode and decode the message identifier.

The message identifier can also be assembled with the message before encoding and the encoding can then be performed on the result of the assembly to have an identifier ID_{CR} incorporated in encrypted form in the transmitted message to then be decoded and extracted on the receiving side.

The owner identifier can be a specific identifier assigned by the manager of the service or a unique already existing identifier chosen conventionally. For example in the case of a natural person owner, his taxpayer's code number, driving license number, credit card number et cetera may be used.

## Claims

1. Method for security verification of a message (Msg) transmitted and received in electronic form which:
- on the transmitting side comprises the steps of appending to the message for its subsequent security verification a univocal message identifier (ID_{Msg}) and an identifier (ID_{CR}) for checking the identity of the message owner with the checking identifier (ID_{CR}) being obtained by applying to the univocal message identifier (ID_{Msg}) a unique coding dependent on the owner of the message to be transmitted, and
- on the receiving side for security verification of a received message (Msg) comprises the steps of:
- comparing the received message identifier (ID_{Msg}) with previously received message identifiers and signaling if a message with the same univocal message identifier (ID_{Msg}) appended thereto has or has not been received previously,
- applying a unique decoding dependent on a supposed owner of the received message to the checking identifier of the owner (ID_{CR}) appended to the received message, and
- ascertaining and signaling the agreement or not between the univocal message identifier (ID_{Msg}) appended to the received message and the result (ID_{DCR}) of said decoding of the checking identifier (ID_{CR}).

2. Method in accordance with claim 1 in which before transmission the univocal message identifier (ID_{Msg}) and the identifier (ID_{CR}) for checking the identity of the message owner are assembled in a unique compound identifier (ID_{T}).

3. Method in accordance with claim 1 in which on the transmitting side at least the checking identifier (ID_{CR}) is assembled with the message and transmitted therewith.

4. Method in accordance with claim 3 in which the assembling takes place by inserting the message identifier (ID_{Msg}) in the message (Msg) and applying the coding to the result of the insertion.

5. Method in accordance with claim 1 in which on the transmitting side, with the message to be transmitted is also associated an owner identifier (ID_{owner}) and on the receiving side the decoding to be applied is selected from among a plurality of possible decodings on the basis of the owner identifier (ID_{owner}) associated with the received message.

6. Method in accordance with claim 1 in which the coding and decoding are keyed encryption and decryption operations.

7. Method in accordance with claim 3 in which encryption and decryption are the type with public/private key.

8. Method in accordance with claim 1 in which ascertainment of the agreement between univocal message identifier (ID_{Msg}) appended to the message received and the result of the decoding of the checking identifier (ID_{CR}) consists of verifying the sameness between said univocal message identifier (ID_{Msg}) and the result of the decoding of the checking identifier (ID_{CR}).

9. System for a safety verification of a message (Msg) transmitted and received in electronic form and comprising:
- on the transmitting side:
- a univocal message identifier generator (ID_{Msg}),
- an encoding device adapted to receive the message identifier (ID_{Msg}) produced by the generator and codify it in accordance with a unique code dependent on the owner of the message to be transmitted to obtain therefrom an identifier (ID_{CR}) for checking the identity of the message owner,
- transmission means adapted to append to the message to be transmitted the checking identifier (ID_{CR}) and the univocal message identifier (ID_{Msg}) obtained,
- on the receiving side for security verification of a received message (Msg):
- a control device which adapted to compare the received message identifier (ID_{Msg}) with previously received message identifiers and signal if the message identifier (ID_{Msg}) appended to the received message has or has not been received previously,
- a decoding device adapted to receive the owner checking identifier (ID_{CR}) appended to the received message and apply thereto a unique decoding dependent on a supposed owner of the received message,
- verification means adapted to ascertain and signal the agreement or not of the univocal message identifier (ID_{Msg}) with the result of the decoding of the checking identifier (ID_{CR}).

10. System in accordance with claim 9 **characterized in that** the encoding and decoding devices are keyed encryption and decryption devices.

11. System in accordance with claim 9 **characterized in that** the encryption and decryption devices are the public/private key type.

## Patentansprüche

1. Verfahren zur Sicherheitsverifizierung einer Nachricht (Msg), die in elektronischer Form gesendet und empfangen wird,
- mit folgenden sendeseitigen Schritten:
- an die Nachricht werden zur späteren Sicherheitsverifizierung eine eindeutige Nachrichtenidentifizierung (ID_{Msg}) und eine Identifizierung (ID_{CR}) zur Kontrolle der Identität des Nachrichteninhabers mittels der Kontrollidentifizierung (ID_{CR}) angehängt, die **dadurch** erhalten wird, dass auf die eindeutige Nachrichtenidentifizierung (ID_{Msg}) eine einzigartige oder eindeutige Kodierung angewandt wird, die von dem Inhaber der zu sendenden Nachricht abhängt;
- und mit den folgenden empfangsseitigen Schritten zur Sicherheitsverifizierung einer empfangenen Nachricht (Msg):
- die empfangene Nachrichtenidentifizierung (ID_{Msg}) wird mit vorher empfangenen Nachrichtenidentifizierungen verglichen, und es wird gemeldet, ob eine Nachricht mit derselben eindeutigen Nachrichtenidentifizierung (ID_{Msg}) im Anhang vorher empfangen wurde oder nicht;
- eine einzigartige oder eindeutige Dekodierung, die von einem vermuteten Inhaber der empfangenen Nachricht abhängt, wird auf die Kontrollidentifizierung des Inhabers (ID_{CR}), die an die empfangene Nachricht angehängt wurde, angewandt; und
- eine vorliegende oder fehlende Übereinstimmung der eindeutigen Nachrichtenidentifizierung (ID_{Msg}), die an die empfangene Nachricht angehängt wurde, mit dem Ergebnis (ID_{DCR}) der Dekodierung der Kontrollidentifizierung (ID_{CR}) wird festgestellt und gemeldet.

2. Verfahren gemäß Anspruch 1, bei dem vor dem Senden die eindeutige Nachrichtenidentifizierung (ID_{Msg}) und die Identifizierung (ID_{CR}) zur Kontrolle der Identität des Nachrichteninhabers zu einer einzigartigen oder eindeutigen Verbundsidentifizierung (ID_{T}) zusammengestellt werden.

3. Verfahren gemäß Anspruch 1, bei dem sendeseitig wenigstens die Kontrollidentifizierung (ID_{CR}) mit der Nachricht zusammengestellt und mit dieser gesendet wird.

4. Verfahren gemäß Anspruch 3, bei dem die Zusammengestellung durch Einfügung der Nachrichtenidentifizierung (ID_{Msg}) in die Nachricht (Msg) und Anwendung der Kodierung auf das Ergebnis der Einfügung erfolgt.

5. Verfahren gemäß Anspruch 1, bei dem sendeseitig der zu sendenden Nachricht auch eine Inhaberidentifizierung (ID_{owner}) zugeordnet wird und empfangsseitig die anzuwendende Dekodierung aufgrund der der empfangenen Nachricht zugeordneten Inhaberidentifizierung (ID_{owner}) aus einer Mehrzahl von möglichen Dekodierungen ausgewählt wird.

6. Verfahren gemäß Anspruch 1, bei dem die Kodierung und die Dekodierung verschlüsselte Chiffrierungs- und Dechiffrierungsoperationen sind.

7. Verfahren gemäß Anspruch 3, bei dem die Chiffrierung und die Dechiffrierung vom Typ mit öffentlichem/privatem Schlüssel sind.

8. Verfahren gemäß Anspruch 1, bei dem die Feststellung der Übereinstimmung der eindeutigen Nachrichtenidentifizierung (ID_{Msg}), die an die empfangene Nachricht angehängt wurde, mit dem Ergebnis der Dekodierung der Kontrollidentifizierung (ID_{CR}) aus einer Verifizierung der Gleichheit der eindeutigen Nachrichtenidentifizierung (ID_{Msg}) mit dem Ergebnis der Dekodierung der Kontrollidentifizierung (ID_{CR}) besteht.

9. System zur Sicherheitsverifizierung einer Nachricht (Msg), die in elektronischer Form gesendet und empfangen wird,
- mit sendeseitig:
- einem Erzeuger einer eindeutigen Nachrichtenidentifizierung (ID_{Msg});
- einer Kodierungsvorrichtung, die angepasst ist, um die vom Erzeuger erstellte Nachrichtenidentifizierung (ID_{Msg}) zu empfangen und gemäß einem einzigartigen oder eindeutigen Kode zu kodifizieren, der von dem Inhaber der zu sendenden Nachricht abhängt, um daraus eine Identifizierung (ID_{CR}) zur Kontrolle der Identität des Nachrichteninhabers zu erhalten;
- Sendeeinrichtungen, die angepasst sind, um an die zu sendende Nachricht die Kontrollidentifizierung (ID_{CR}) und die erhaltene eindeutige Nachrichtenidentifizierung (ID_{Msg}) anzuhängen;
- und mit empfangsseitig zur Sicherheitsverifizierung einer empfangenen Nachricht (Msg):
- einer Kontrollvorrichtung, die angepasst ist, um die empfangene Nachrichtenidentifizierung (ID_{Msg}) mit vorher empfangenen Nachrichtenidentifizierungen zu vergleichen und zu melden, ob die Nachrichtenidentifizierung (ID_{Msg}), die an die empfangene Nachricht angehängt wurde, vorher empfangen wurde oder nicht;
- eine Dekodierungsvorrichtung, die angepasst ist, um die Inhaberkontrollidentifizierung (ID_{CR}), die an die empfangene Nachricht angehängt wurde, zu empfangen und auf sie eine einzigartige oder eindeutige Dekodierung anzuwenden, die von einem vermuteten Inhaber der empfangenen Nachricht abhängt;
- Verifizierungseinrichtungen, die angepasst sind, um die vorliegende oder fehlende Übereinstimmung der eindeutigen Nachrichtenidentifizierung (ID_{Msg}) mit dem Ergebnis der Dekodierung der Kontrollidentifizierung (ID_{CR}) festzustellen und zu melden.

10. System gemäß Anspruch 9, **dadurch gekennzeichnet, dass** die Kodierungsvorrichtung und die Dekodierungsvorrichtung Vorrichtungen der verschlüsselten Chiffrierung und Dechiffrierung sind.

11. System gemäß Anspruch 9, **dadurch gekennzeichnet, dass** die Chiffrierungsvorrichtung und die Dechiffrierungsvorrichtung vom Typ mit öffentlichem/privatem Schlüssel sind.

## Revendications

1. Procédé de contrôle de sécurité d'un message (Msg) émis et reçu sous forme électronique qui :
- du côté émission, comprend les étapes consistant à annexer au message, pour son contrôle de sécurité futur, un identificateur de message univoque (ID_{Msg}) et un identificateur (ID_{CR}) pour contrôler l'identité du propriétaire du message, l'identificateur de contrôle (ID_{CR}) étant obtenu en appliquant à l'identificateur de message univoque (ID_{Msg}) un codage propre dépendant du propriétaire du message à émettre, et
- du côté réception, pour le contrôle de sécurité d'un message reçu (Msg), comprend les étapes consistant à :
- comparer l'identificateur de message reçu (ID_{Msg}) avec des identificateurs de messages reçus précédemment et signaler si un message ayant le même identificateur de message univoque (ID_{Msg}) annexé à ce dernier a ou n'a pas été reçu précédemment,
- appliquer un décodage propre dépendant d'un propriétaire supposé du message reçu à l'identificateur de contrôle du propriétaire (ID_{CR}) annexé au message reçu, et
- vérifier et signaler l'accord ou non entre l'identificateur de message univoque (ID_{Msg}) annexé au message reçu et le résultat (ID_{DCR}) dudit décodage de l'identificateur de contrôle (ID_{CR}).

2. Procédé selon la revendication 1, dans lequel, avant l'émission, l'identificateur de message univoque (ID_{Msg}) et l'identificateur (ID_{CR}) pour contrôler l'identité du propriétaire du message sont assemblés en un seul identificateur composé (ID_{T}).

3. Procédé selon la revendication 1, dans lequel, du côté émission, au moins l'identificateur de contrôle (ID_{CR}) est assemblé au message et transmis avec celui-ci.

4. Procédé selon la revendication 3, dans lequel l'assemblage se fait en insérant l'identificateur de message (ID_{Msg}) dans le message (Msg) et en appliquant le codage au résultat de l'insertion.

5. Procédé selon la revendication 1, dans lequel, du côté émission, avec le message à transmettre est aussi associé un identificateur de propriétaire (ID_{owner}) et du côté réception, le décodage à appliquer est choisi parmi une pluralité de décodages possibles d'après l'identificateur de propriétaire (ID_{owner}) associé au message reçu.

6. Procédé selon la revendication 1, dans lequel le codage et le décodage sont des opérations de cryptage et de décryptage à clé.

7. Procédé selon la revendication 3, dans lequel le cryptage et le décryptage sont du type à clé publique/privée.

8. Procédé selon la revendication 1, dans lequel la vérification de l'accord entre l'identificateur de message univoque (ID_{Msg}) annexé au message reçu et le résultat du décodage de l'identificateur de contrôle (ID_{CR}) consiste à vérifier la similitude entre ledit identificateur de message univoque (ID_{Msg}) et le résultat du décodage de l'identificateur de contrôle (ID_{CR}).

9. Système de contrôle de sécurité d'un message (Msg) émis et reçu sous forme électronique et comprenant :
- côté émission :
- un générateur d'identificateur de message univoque (ID_{Msg}),
- un dispositif de codage adapté pour recevoir l'identificateur de message (ID_{Msg}) produit par le générateur et le coder selon un code propre dépendant du propriétaire du message à transmettre pour obtenir de celui-ci un identificateur (ID_{CR}) pour contrôler l'identité du propriétaire du message,
- un moyen d'émission adapté pour annexer au message à transmettre l'identificateur de contrôle (ID_{CR}) et l'identificateur de message univoque (ID_{Msg}) obtenu,
- côté réception, pour le contrôle de sécurité d'un message reçu (Msg) :
- un dispositif de commande adapté pour comparer l'identificateur de message reçu (ID_{Msg}) avec des identificateurs de messages précédemment reçus et signaler si l'identificateur de message (ID_{Msg}) annexé au message reçu a ou n'a pas été reçu précédemment,
- un dispositif de décodage adapté pour recevoir l'identificateur de contrôle de propriétaire (ID_{CR}) annexé au message reçu et appliquer à celui-ci un décodage propre dépendant d'un propriétaire supposé du message reçu,
- un moyen de contrôle adapté pour vérifier et signaler l'accord ou non de l'identificateur de message univoque (ID_{Msg}) avec le résultat du décodage de l'identificateur de contrôle (ID_{CR}).

10. Système selon la revendication 9, **caractérisé en ce que** les dispositifs de codage et de décodage sont des dispositifs de cryptage et de décryptage à clé.

11. Système selon la revendication 9, **caractérisé en ce que** les dispositifs de cryptage et de décryptage sont du type à clé publique/privée.
